(19) Europäisches Patentamt / European Patent Office / Office européen des brevets

(11) **EP 3 558 883 B1**

(12) **EUROPEAN PATENT SPECIFICATION**

(45) Date of publication and mention
of the grant of the patent:
**15.02.2023 Bulletin 2023/07**

(21) Application number: **17828731.4**

(22) Date of filing: **20.12.2017**

(51) International Patent Classification (IPC):
*C03C 1/00* [(1968.09)]        *C03C 1/02* [(1968.09)]
*C03B 1/02* [(1990.01)]        *C03C 25/70* [(2000.01)]

(52) Cooperative Patent Classification (CPC):
**C03C 25/70; C03B 1/02; C03C 1/002; C03C 1/026**

(86) International application number:
**PCT/EP2017/083920**

(87) International publication number:
**WO 2018/115182 (28.06.2018 Gazette 2018/26)**

(54) **METHOD FOR TREATING MINERAL WOOL MATERIAL**

VERFAHREN ZUR BEHANDLUNG VON MATERIAL AUS MINERALWOLLE

PROCÉDÉ DE TRAITEMENT DE MATÉRIAU EN LAINE MINÉRALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2016 EP 16206853**

(43) Date of publication of application:
**30.10.2019 Bulletin 2019/44**

(73) Proprietor: **ROCKWOOL A/S
2640 Hedehusene (DK)**

(72) Inventors:
• **HANSEN, Erling Lennart
2830 Virum (DK)**
• **HJELMGAARD, Thomas
3480 Fredensborg (DK)**

(74) Representative: **Letzelter, Felix Phillip
Meissner Bolte Patentanwälte
Rechtsanwälte Partnerschaft mbB
Widenmayerstraße 47
80538 München (DE)**

(56) References cited:
WO-A1-96/26164        WO-A1-2011/044490
WO-A1-2012/013780

• **Unknown: "Teacher reference pages - Yeast
fermentation lab", , 26 April 2001 (2001-04-26),
XP002773238, Retrieved from the Internet:
URL:https://www.oxy.edu/sites/default/file
s/assets/TOPS/YEAST-T.pdf [retrieved on
2017-08-28]**

**Description**

**Field of the Invention**

The present invention relates to a compacted body, in particular a briquette, comprising a product obtained by a method for the reduction of the carbohydrate content in a mineral wool material comprising a carbohydrate-containing binder.

**Background of the Invention**

Man-made vitreous fibres (MMVF) such as, e.g., basalt fibres, slag fibres, glass fibres and stone fibres may be made by melting a mineral charge in a furnace and fiberising the melt. The MMV fibres produced may form wool products such as stone wool.

In some of the furnaces used for MMVF production, there is a large pool of melt and the mineral charge is melted into this pool. Examples are tank and electric furnaces, which can be used for stone fibre production but mostly for glass fibre production.

Another type of furnace which is used for forming the melt for MMVF production, especially of fibres of the types that are referred to as stone, slag and basalt fibres, is a shaft furnace or cupola furnace which contains a self-supporting column of solid coarse mineral and combustion material, and combustion gases permeate through this column so as to heat it and cause melting. The melt drains to the bottom of the column, where a pool of melt is usually formed, and the melt is removed from the base of the furnace. Since the column has to be both self-supporting and permeable it is necessary that the raw material should be relatively coarse and should have considerable strength, despite the high temperatures in the column which may exceed 1000°C.

The raw material can be formed of coarsely crushed, naturally occurring rock and slag or any other type of suitable coarse material, provided this will withstand the pressures and temperatures in the self-supporting column in the shaft furnace. When applying more fine grained raw materials it is known to convert the finer particulate materials such as sands into bonded briquettes for addition to the furnace. These should have sufficient strength and temperature resistance to withstand the conditions in the self-supporting column in the shaft furnace in order that they melt prior to collapsing.

It is necessary for the total charge in the furnace (i. e., lump mineral alone or lump mineral plus briquettes) to provide the composition which is desired for the MMV fibres which are to be made. However, in shaft furnaces the residence time of material in the small melt pool at the base of the furnace is short, and the raw materials must be incorporated sufficiently rapidly in this pool of melt if a melt is to be obtained which is suitable for provision of final product having specified properties.

In the manufacture of mineral wool products, the fibres obtained in the spinning process are blown into a collection chamber and, while airborne and while still hot, are sprayed with a binder solution and randomly deposited as a mat or web onto a travelling conveyor. The fibre web or mat is then transferred to a curing oven where heated air is blown through the mat to cure the binder. The cured mat or slab is trimmed at the sides and cut up into certain dimensions. Both during spinning and during trimming, cutting up into final dimension and subsequent final inspection and check for defects, waste products are arising which are either dumped or, preferably, recycled to the MMVF production process.

To that end, the waste products are broken up into smaller, fine-grained pieces by milling in a rod mill or any appropriate device/equipment and/or unravelled and then compacted to form briquettes. Briquettes from MMVF waste are normally produced by moulding a mix of the MMVF waste, optionally together with other fine-grained components in finely divided form, and an appropriate binder into the desired briquette shape and curing the binder. Preferably, a cement binder is used to produce cement briquettes.

The briquettes, possibly after interim storage, may be combined with virgin raw material and/or other lump raw material such as slag for MMVF production and returned via the melting furnace into the MMVF production process. Briquettes are particularly useful for forming part, often most of the charge in a shaft or cupola furnace. The amount of briquettes may be up to 100%, such as up to 80% or 50%, of the total charge. They may also be used as part of the charge in an electric furnace.

When using MMVF waste for briquette production, the waste products may contain cured and/or uncured mineral wool binder, depending on the point in the production line where the waste products are formed.

A group of formaldehyde-free mineral wool binders are those which contain carbohydrates, for instance, starch or sugar, as additives, extenders or as reactive components of the binder system; see, e.g. WO 2007/014236.

Such carbohydrate-containing mineral wool binders are very advantageous both from the economical and ecological point of view, because carbohydrates are an inexpensive component and at the same time are non-toxic and renewable. Accordingly, in particular mineral wool binders which contain carbohydrates as a major component have been increasingly used in the field.

It has however been found that the presence of non-cured or partly cured carbohydrate-containing mineral wool binder in the MMVF waste results in prolonged curing times of cement-containing briquettes, the reason being that carbohydrates are retarders for cement. The term carbohydrate, as used herein, refers to monosaccharides, disaccharides, polysaccharides and mixtures thereof.

Accordingly, the very advantageous properties of carbohydrate-containing mineral wool binders are somewhat impaired by the fact that they render the recycling of waste material from the mineral wool production more difficult. Consequently, there exists a need to overcome this disadvantage of carbohydrate containing mineral wool binders.

WO2012/013780A1 relates to the provision of briquettes from MMVF wastes used for producing vitreous fibres.

**Summary of the Invention**

An object of the present invention was to provide a compacted body, in particular a briquette, suitable for use as a mineral charge in the production of man-made vitreous fibres (MMVF) prepared from a product with improved recyclability produced by treating a substrate comprising a mineral wool material comprising a carbohydrate-containing binder with a method which improves the recyclability of a mineral wool material, in particular which allows the reduction of the carbohydrate content in a mineral wool material, which is improved in strength.

In accordance to an aspect of the present invention, there is provided a compacted body, in particular a briquette, suitable for a use in a mineral charge in the production of man-made vitreous fibres (MMVF), said compacted body comprising a product obtained by treating a substrate with a method for the reduction of the carbohydrate content in a mineral wool material, said material comprising a carbohydrate-containing binder, wherein the method involves a step of treating a substrate comprising the material with one or more microorganisms capable of metabolizing the carbohydrate and/or an extract of one or more microorganisms capable of metabolizing the carbohydrate; and a cement binder.

Accordingly, there is provided a compacted body, in particular briquette, suitable for use in a mineral charge in the production of man-made vitreous fibres (MMVF), said compacted body comprising a product obtained by treating a substrate with a method for the reduction of the carbohydrate content in a mineral wool material, said material comprising a carbohydrate-containing binder, wherein the method involves a step of treating a substrate comprising the material with one or more microorganisms capable of metabolizing the carbohydrate and/or an extract of one or more microorganisms capable of metabolizing the carbohydrate, and a cement binder.

The present invention describes that it is surprisingly possible to significantly improve the recyclability of a mineral wool material comprising a carbohydrate-containing binder by such a method. This is accomplished by treating the material with such microorganisms and/or an extract of such microorganisms. It is highly surprising that despite the presence of high amounts of the other binder components and of the mineral wool fibres, a significant reduction of the carbohydrate content is possible by the treatment with microorganisms and/or an extract of microorganisms. It is shown by the present invention that by such a method, the carbohydrate content can be lowered without the need for any special equipment or expensive chemicals. The method according to the present invention allows to combine the advantages of the use of mineral wool binders high in carbohydrate content with the advantages associated with the recycling of the waste material from a production of the mineral wool in an efficient way since the easy reduction of the carbohydrate content in the waste material allowed by the method according to the present invention enables the production of compacted bodies with improved strength which can easily can be returned into the MMVF production process.

**Description of the preferred embodiments**

The compacted body according to the present invention is a compacted body, in particular a briquette, suitable for a use in a mineral charge in the production of man-made vitreous fibres (MMVF), said compacted body comprising a product obtained by treating a substrate with a method for the reduction of the carbohydrate content in a mineral wool material, said material comprising a carbohydrate-containing binder, wherein the method involves a step of treating a substrate comprising the material with one or more microorganisms capable of metabolizing the carbohydrate and/or an extract of one or more microorganisms capable of metabolizing the carbohydrate, and a cement binder.

For the purpose of the present invention, the term mineral wool material means any material where mineral wool is in contact with uncured and/or cured binder. In particular, the term mineral wool material refers to a waste material from the production process for a MMVF production.

In the following, the term "material" is used to describe the "mineral wool material".

For the purpose of the present invention, the term substrate means a composition comprising the mineral wool material and everything that is added to this material prior to the step, or during or after the step of treating the substrate with the microorganisms and/or extract of microorganism, in particular water and any form of additives.

In a preferred embodiment, the compacted body according to the present invention comprises a product obtained by treating a substrate with a method which involves a step of comminuting the material, preferably by rod milling.

In a preferred embodiment, the compacted body according to the present invention comprises a product obtained by treating a substrate with a method which involves a step of adding to the material, one or more of: microorganisms, extract of microorganisms or additives, before a step, or during or after of comminuting the material, preferably by rod milling.

In a preferred embodiment, the material used in the method of the according invention is a waste material from an MMVF production process, which typically comprises one or more of spinning chamber filters, screw waste, side cuttings, flushed wastes, spinning chamber filter bottom wastes, cleanings of spinning chamber, spinning screw waste, cured waste, spinning chamber filter mats.

One step slurry process

In one preferred embodiment, the compacted body according to the present invention comprises a product obtained by treating a substrate with a method which is carried out in a way that the substrate comprises water in an amount of more than 40 to 90 wt.-% (i.e. > 40 to 90 wt.-%), preferably 50 to 76 wt.-%, based on the total weight of the material.

This relatively high water content usually means that the material is present in form of slurry. The present inventors have found that this embodiment of the invention is particularly useful when the material comprises spinning chamber filters, spinning chamber filter bottom wastes, cleanings of spinning chamber, and/or spinning chamber filter mats.

In carrying out this method, the material is mixed with water (and optionally with additives) in order to obtain the substrate with the desired water content.

Preferably, the one or more microorganism is then added in an amount so that the one or more microorganism is present in an amount of $0.0125 \times 10^9$ to $500 \times 10^9$, preferably $0.1 \times 10^9$ to $250 \times 10^9$ microorganisms/gram, based on the total weight of the substrate, and microorganisms and/or extract of microorganisms.

More preferably, the one or more microorganism is then added in an amount so that the one or more microorganism is present in an amount of $0.0125 \times 10^9$ to $10 \times 10^9$, preferably $0.1 \times 10^9$ to $5 \times 10^9$ microorganisms/gram, based on the total weight of the substrate, and microorganisms and/or extract of microorganisms.

In an alternative embodiment, an extract of microorganism is added. Preferably, the extract of microorganisms is added so that the extract is present in an amount of 0.5 to 25 wt.-%, preferably 4 to 18 wt.-%, based on the total weight of the substrate, and microorganisms and/or extract of microorganisms.

These embodiments can also be combined, i.e. by adding both microorganisms and an extract of microorganisms.

The method used to prepare the compacted body according to the present invention can be used with a mineral wool material comprising a carbohydrate-containing binder both with high and low carbohydrate content. In a preferred embodiment, the material has a carbohydrate content of 0.1 to 35, preferably 0.5 to 25 wt.-% carbohydrate, based on the total weight of the material.

The method used to prepare the compacted body according to the present invention is not generally limited to a certain temperature range. However, in a preferred embodiment, the step of treating the substrate takes place at a temperature of 10 to 50 °C, preferably 15 to 45 °C. This usually means that the treating step takes place without any need of external heating or cooling and therefore without the need for any additional equipment.

It has been found out by the present inventors that an effective reduction of the carbohydrate content can be achieved in a fairly short time frame. While the method used to prepare the compacted body according to the present invention is not limited to a specific time regime, it is preferred that the step of treating the material takes place over a time of 1 - 72 hours, preferably 6 - 24 hours.

One-step-process with low water content

In an alternative preferred embodiment, the method used to prepare the compacted body according to the present invention is carried out on a substrate which comprises water in an amount of 10 to 40 wt.-%, preferably 20 to 40 wt.- %, based on the total weight of the substrate.

In this alternative embodiment, the material typically is present as a wet powder of comminuted material to which water has been added.

In a preferred embodiment, the one or more microorganisms is present in an amount of $0.000625 \times 10^9$ to $125 \times 10^9$, preferably $0.005 \times 10^9$ to $75 \times 10^9$ microorganisms/gram, based on the total weight of the substrate, and microorganisms and/or extract of microorganisms.

In a more preferred embodiment, the one or more microorganisms is present in an amount of $0.000625 \times 10^9$ to $2.5 \times 10^9$, preferably $0.005 \times 10^9$ to $1.5 \times 10^9$ microorganisms/gram, based on the total weight of the substrate, and microorganisms and/or extract of microorganisms.

In an alternative embodiment, an extract of microorganisms is used. In this embodiment, the extract is preferably present in an amount of 0.05 to 15 wt.-%, preferably 0.2 to 5 wt.-%, based on the total weight of the substrate, microorganisms and/or extract of microorganisms.

In a further embodiment, both microorganisms and an extract of microorganisms are used.

The present inventors have found that the method used to prepare the compacted body according to the present invention can be improved when the substrate comprises a fermentation enhancer.

Typically, this fermentation enhancer is a component that stabilizes the pH value and/or serves as a nutrient for the microorganisms.

In a preferred embodiment the fermentation enhancer is one or more of the group of phosphoric acids and/or phosphates, acetic acid and/or any salts thereof.

In the context of the present invention, the term phosphoric acids is meant to cover all types of phosphor-containing mineral acids and the term phosphates is meant to cover the salts of all types of phosphor-containing mineral acids.

Alternatively, an extract of microorganisms can also serve as a fermentation enhancer.

While the amount of fermentation enhancer used is not generally limited, it is preferred that the substrate comprises the fermentation enhancer in an amount of 0.01 to 5 wt.-%, preferably 0.05 to 0.4 wt.-%, based on the total weight of the substrate, microorganisms and/or extract of microorganisms.

While the carbohydrate content of the material which is used for the method used to prepare the compacted body according to the present invention is not limited, in a preferred embodiment, the material has a carbohydrate content of 0.05 to 70 wt.-% carbohydrate, preferably 0.05 to 50 wt.-%, more preferably 0.05 to 40 wt.-%, more preferably 0.05 to 30 wt.-%, based on the total weight of the material.

In a particularly prefered embodiment, the material has a carbohydrate content of 0.05 to 10, preferably 0.25 to 4 wt.-% carbohydrate, based on the total weight of the material.

While the present invention is not generally limited to a certain temperature range, in a preferred embodiment, the method used to prepare the compacted body according to the present invention involves the step of treating the material at a temperature of 10 to 50 °C, preferably 15 to 45 °C. This usually means that the treating step takes place without any need of external heating or cooling and therefore without the need for any additional equipment.

While the method used to prepare the compacted body according to the present invention according to this embodiment is not restricted to any time regime, in a preferred embodiment, the method involves the step of treating the material over a time of 3 hours to 30 days, preferably 1 to 3 days.

**Two-step-process**

The present inventors have found that particularly advantageous results are achieved, when the one-step-slurry-process is combined with the one-step-process with low water content to a two-step-process.

In this embodiment, the method used to prepare the compacted body according to the present invention comprises at least two steps in form of:

(i) treating a substrate with the one-step-slurry-process described above and
(ii) treating a combined substrate of the product of the step (i) and a further substrate with the one-step-process with low water content described above.

In this two-step-process, step one is used to prepare a "starter culture" for the process according to step (ii).

Step (i)

In a preferred embodiment, step (i) is carried out in a way that the substrate comprises water in an amount of more than 40 to 90 wt.-% (i.e. > 40 to 90 wt.- %), preferably 50 to 76 wt.-%, based on the total weight of the material.

This relatively high water content usually means that the material is present in form of slurry. The present inventors have found that this embodiment of the invention is particularly useful when the material comprises spinning chamber filters, spinning chamber filter bottom wastes, cleanings of spinning chamber, and/or spinning chamber filter mates.

In carrying out this step (i), the material is mixed with water (and optionally with additives) in order to obtain the substrate with the desired water content.

Preferably, the one or more microorganism is then added in an amount so that the one or more microorganism is present in an amount of $0.0125 \times 10^9$ to $500 \times 10^9$, preferably $0.1 \times 10^9$ to $250 \times 10^9$ microorganisms/gram, based on the total weight of the substrate, and microorganisms and/or extract of microorganisms.

More preferably, the one or more microorganism is then added in an amount so that the one or more microorganism is present in an amount of $0.0125 \times 10^9$ to $10 \times 10^9$, preferably $0.1 \times 10^9$ to $5 \times 10^9$ microorganisms/gram, based on the total weight of the substrate, and microorganisms and/or extract of microorganisms.

In an alternative embodiment, an extract of microorganism is added. Preferably, the extract of microorganisms is added so that the extract is present in an amount of 0.5 to 25 wt.-%, preferably 4 to 18 wt.-%, based on the total weight of the substrate, and microorganisms and/or extract of microorganisms.

These embodiments can also be combined, i.e. by adding both microorganisms and an extract of microorganisms.

The method used to prepare the compacted body according to the present invention according to step (i) can be used with a mineral wool material comprising a carbohydrate-containing binder both with high and low carbohydrate content. In a preferred embodiment, the material has a carbohydrate content of 0.1 to 35, preferably 0.5 to 25 wt.-% carbohydrate, based on the total weight of the material.

The method used to prepare the compacted body according to the present invention according to step (i) is not generally limited to a certain temperature range. However, in a preferred embodiment, the step of treating the substrate takes place at a temperature of 10 to 50 °C, preferably 15 to 45 °C. This usually means that the treating step takes place without any need of external heating or cooling and therefore without the need for any additional equipment.

It has been found out by the present inventors that an effective reduction of the carbohydrate content can be achieved in a fairly short time frame. While the method used to prepare the compacted body according to the present invention according to step (i) is not limited to a specific time regime, it is preferred that the step of treating the material takes place over a time of 1 - 72 hours, preferably 6 - 24 hours.

In a preferred embodiment, the substrate treated in step (i) comprises spinning chamber filters.

Step (ii)

In a preferred embodiment, the combined substrate used in step (ii) is present as a wet powder of comminuted material to which water has been added.

In a preferred embodiment, the one or more microorganisms is present in an amount of $0.000625 \times 10^9$ to $125 \times 10^9$, preferably $0.005 \times 10^9$ to $75 \times 10^9$ microorganisms/gram, based on the total weight of the substrate, and microorganisms and/or extract of microorganisms.

In a more preferred embodiment, the one or more microorganisms is present in an amount of $0.000625 \times 10^9$ to $2.5 \times 10^9$, preferably $0.005 \times 10^9$ to $1.5 \times 10^9$ microorganisms/gram, based on the total weight of the substrate, and microorganisms and/or extract of microorganisms.

In an alternative embodiment, an extract of microorganisms is used. In this embodiment, the extract is preferably present in an amount of 0.05 to 15 wt.-%, preferably 0.2 to 5 wt.-%, based on the total weight of the material, microorganisms and/or extract of microorganisms.

In a further embodiment, both microorganisms and an extract of microorganisms are used.

The present inventors have found that the method can be improved when the material comprises a fermentation enhancer.

Typically, this fermentation enhancer is a component that stabilizes the pH value and/or servers as a nutrient for the microorganisms.

In a preferred embodiment the fermentation enhancer is one or more of the group of phosphoric acids and/or phosphates, acetic acid and/or any salts thereof.

In the context of the present invention, the term phosphoric acids is meant to cover all types of phosphor-containing mineral acids and the term phosphates is meant to cover the salts of all types of phosphor-containing mineral acids.

Alternatively, an extract of microorganisms can also serve as a fermentation enhancer.

While the amount of fermentation enhancer used is not generally limited, it is preferred that the substrate comprises the fermentation enhancer in an amount of 0.01 to 5 wt.-%, preferably 0.05 to 0.4 wt.-%, based on the total weight of the substrate, microorganisms and/or extract of microorganisms.

While the carbohydrate content of the material which is used for the method according to this embodiment is not limited, in a preferred embodiment, the material has a carbohydrate content of 0.05 to 70 wt.-% carbohydrate, preferably 0.05 to 50 wt.-%, more preferably 0.05 to 40 wt.-%, more preferably 0.05 to 30 wt.-%, based on the total weight of the material.

In a particularly prefered embodiment, the material has a carbohydrate content of 0.05 to 10, preferably 0.25 to 4 wt.-% carbohydrate, based on the total weight of the material.

While the step (ii) is not generally limited to a certain temperature range, in a preferred embodiment, the method involves the step of treating the material at a temperature of 10 to 50 °C, preferably 15 to 45 °C. This usually means that the treating step takes place without any need of external heating or cooling and therefore without the need for any additional equipment.

While step (ii) is not restricted to any certain time regime, in a preferred embodiment, the method involves the step of treating the material over a time of 3 hours to 30 days, preferably 1 to 3 days.

Carbohydrate-containing binders used in the production of the mineral wool material treated by the method used to prepare the compacted body according to the present invention

The patent according to the present invention can be used on any mineral wool material that comprises a carbohydrate-containing binder.

In one preferred embodiment, the carbohydrate-containing binder used in the production of the mineral wool material comprises a phenol-formaldehyde-based resol and the carbohydrate being selected from a sugar, such as dextrose.

In a further preferred embodiment, the carbohydrate-containing binder used in the production of the mineral wool material further comprises

(a) a polycarboxylic acid component or any salt thereof and/or an inorganic acid or any salt thereof

(b) a component selected from the group consisting of amine compounds, ammonia; and optionally,

(c) a reaction product of a polycarboxylic acid component or anhydride thereof and an alkanolamine component.

In a further preferred embodiment, the carbohydrate-containing binder used in the production of the mineral wool material comprises a carbohydrate selected from hexose, such as dextrose, fructose, pentose such as xylose and/or sucrose, glucose syrup.

Microorganisms or extract of microorganisms

In a preferred embodiment, the one or more one or more microorganism is selected from the group consisting of fungi, yeasts, preferably the yeast comprising saccharomyces cerevisiae and/or bacteria in particular of the genera lactobacillus, leuconostoc, pediococcos, and/or bifidobacterium.

In a preferred embodiment, the one or more microorganism comprises a yeast comprising saccharomyces cerevisiae.

In a particular preferred embodiment, the microorganism is saccharomyces cerevisiae.

The compacted body according to the present invention preferably comprises a product which has significantly reduced carbohydrate content when compared to the mineral wool starting material and is therefore improved in its recyclability.

Compacted body

The present invention is directed to a compacted body, in particular briquette, suitable for a use in a mineral charge in the production of man-made vitreous fibres (MMVF), said contacted body comprising

a) a product obtained by treating a substrate with a method for the reduction of the carbohydrate content in a mineral wool material, said material comprising a carbohydrate-containing binder, wherein the method involves a step of treating a substrate comprising the material with one or more microorganisms capable of metabolizing the carbohydrate and/or an extract of one or more microorganisms capable of metabolizing the carbohydrate;
b) a cement binder.

The compacted body according to the present invention is improved in strength and can therefore be used very advantageously as a charge in shaft furnaces.

**EXAMPLES**

The following examples are intended to further illustrate the invention without limiting its scope.

Yeast and additives and other components

Fresh, compressed Baker's yeast, active cells of Saccharomyces cerevisiae, approx. 30% dry matter (>31% dry matter), was obtained from De Danske Gaerfabrikker. Instaferm® RED In-stant Dry Baker's Yeast, Saccharomyces cerevisiae, approx. 95% dry matter (≤6% moisture), approx. 20 billion live cells per gram, was obtained from Lallemand. Fresh and dry Baker's yeast were calculated as anhydrous for simplicity.

Phosphate buffers, glacial acetic acid and sodium dihydrogen phosphate monohydrate for use as additives in lab-scale fermentation studies were obtained from Sigma-Aldrich. Glacial acetic acid and sodium dihydrogen phosphate monohydrate for 1 ton scale fermentation studies were obtained from Panreac.

Carbohydrate-containina binders

Alkanolamine-anhydride resin w glucose syrup binder

This binder is based on alkanolamine-polycarboxylic acid anhydride reaction products.

Diethanolamine (DEA, 120.5 g) is placed in a 5-litre glass reactor provided with a stirrer and a heating/cooling jacket. The temperature of the diethanolamine is raised to 60 °C where after tetrahydrophthalic anhydride (THPA, 67.1 g) is added. After raising the temperature and keeping it at 130 °C, a second portion of tetrahydrophthalic anhydride (33.6 g) is added followed by trimellitic anhydride (TMA, 67.1 g). After reacting at 130 °C for 1 hour, the mixture is cooled to 95 °C. Water (241.7 g) is added and stirring is continued for 1 hour. Urea (216.1 g) is then added and stirring is continued until all solids are dissolved. After cooling to ambient temperature, the mixture is poured into water (3.32 kg) and 50% aq. hypophosphorous acid (5.0 g) and 25% aq. ammonia (56.3 g) are added under stirring.

Glucose syrup (1.24 kg) is heated to 60 °C and then added under stirring followed by 50% aq. silane (Momentive VS-142) (5.0 g).

Ascorbic acid-glucose binder

A mixture of L-ascorbic acid (1.50 g, 8.52 mmol) and 75.1% aq. glucose syrup (18.0 g; thus efficiently 13.5 g glucose syrup) and urea (0.75 g) in water (30.5 g) was stirred at room temperature until a clear solution was obtained. 50% aq. hypophosphorous acid (0.60 15 g; thus efficiently 0.30 g, 4.55 mmol hypophosphorous acid) was then added (pH 1.3). 28% aq. ammonia (0.99 g; thus efficiently 0.28 g, 16.3 mmol ammonia) was then added dropwise until pH = 6.7. The binder solids was then measured (20.1 wt.%).

Silane was added in an amount corresponding to 0.5% of solids.

Phenolformaldehyde with urea (PUF)-glucose syrup binder

This binder is a phenol-formaldehyde resin modified with urea, a PUF-resol.

A phenol-formaldehyde resin is prepared by reacting 37% aq. formaldehyde (606 g) and phenol (189 g) in the presence of 46% aq. potassium hydroxide (25.5 g) at a reaction temperature of 84°C preceded by a heating rate of approximately 1°C per minute. The reaction is continued at 84 °C until the acid tolerance of the resin is 4 and most of the phenol is converted. Urea (241 g) is then added and the mixture is cooled.

The acid tolerance (AT) expresses the number of times a given volume of a binder can be diluted with acid without the mixture becoming cloudy (the binder precipitates). Sulfuric acid is used to determine the stop criterion in a binder production and an acid tolerance lower than 4 indicates the end of the binder reaction.

To measure the AT, a titrant is produced from diluting 2.5 ml conc. sulfuric acid (>99 %) with 1 L ion exchanged water. 5 mL of the binder to be investigated is then titrated at room temperature with this titrant while keeping the binder in motion by manually shaking it; if preferred, use a magnetic stirrer and a magnetic stick. Titration is continued until a slight cloud appears in the binder, which does not disappear when the binder is shaken. The acid tolerance (AT) is calculated by dividing the amount of acid used for the titration (mL) with the amount of sample (mL):

$$AT = (Used\ titration\ volume\ (mL)) / (Sample\ volume\ (mL))$$

Using the urea-modified phenol-formaldehyde resin obtained, a binder is made by addition of 25% aq. ammonia (90 mL) and ammonium sulfate (13.2 g) followed by water (1.30 kg) and silane (2,4 g).

Model rod milled wastes (RMW) containing alkanolamine-anhydride resin w glucose syrup or ascorbic acid-glucose binder were produced by mixing heat treated rod milled wastes from different sources with the given binder mixture, water and other additives if relevant. Heat treating of the rod milled wastes was carried out at 590 °C overnight to remove other organic components.

Model rod milled wastes containing phenolformaldehyde with urea (PUF) - glucose syrup binder were produced by mixing PUF rod milled wastes with aqueous solutions of glucose syrup, water and other additives if relevant.

Glucose content measurements using HPLC and/or blood sugar apparatus

The evolution of glucose content in the fermentation mixtures were followed by HPLC and/or with a blood sugar apparatus (AccuChek® Aviva Nano) on aqueous extracts of the fermentation mixtures.

Presentation of results

The results are presented in tables that contain information about:

- Fermentation mixture (%): The composition of the fermentation mixtures, calculated as %-wt. yeast, binder, fibres, moisture and additives of the total mix (so that yeast + binder + fibres + moisture + additives = 100%-wt.). Data that are given in italic comprise information that further detail how much %-wt. of the total mixture that is made out of a certain chosen sub-component.

- Fermentation conditions: The conditions under which the fermentations have been performed. It includes information such as storing temperature, measuring time, and pH of aqueous extracts made at the start and in the end of the fermentations.

- Glucose removal: Details the time (days/hours) required for >25%, >50%, >75% and >90% reduction in glucose content in aqueous extracts from the fermentation mixtures calculated as relative to the initial values. Measured by means of HPLC or a blood sugar apparatus. In tests where briquettes have been made, the glucose reduction at briquetting day has furthermore been detailed.

- Test bar composition (%): The composition of the test bars made at FEhS in Duisburg. Only the content of the fermentation mixture or reference rod milled wool is detailed in the tables. Other components in test bars made from fermented waste include: Cement 52,5R (12.3%), sand (53.8%). Other components in test bars made from reference rod milled waste include: Cement 52,5R (13.0%), sand (57.0%).

- Compression strength (MPa): The compression strengths of test bars after a certain number of days, measured at FEhS, Duisburg.

- Briquette compositions (%): The composition of the test briquettes. Only the content of the fermentation mixture or reference rod milled wool as well as the content of cement are detailed in the tables. Other components in briquettes made from fermented waste include: Valdi (6.9%), dolomitic sand (4.9%), laitier criblé (9.8%), MTMS (5.9%), SSA SSIAAP (7.9%), mix tamisage (4.9%), fly ash (3.9%), bauxite (14.7%). Other components in briquettes made from reference rod milled waste include: Valdi (7.0%), dolomitic sand (5.0%), laitier criblé (10.0%), MTMS (6.0%), SSA SSIAAP (8.0%), mix tamisage (5.0%), fly ash (4.0%), bauxite (15.0%).

- Briquette details (%): The weight, height, density of the test briquettes, as well as the compression strengths of the test briquettes after a certain number of days. A briquette compression strength values of 5 MPa or more may be considered to be adequate.

Table 1

| Example | 1 | 2 | 3 | 4 | 5 | 6 | 7 | 8 |
|---|---|---|---|---|---|---|---|---|
| **Fermentation mixture (%)** <br> **Fresh** Baker's Yeast | 0,30% | 0,30% | 0,30% | 0,30% | 0,20% | 0,20% | 0,20% | 0,20% |
| alkanolamine-anhydride resin w glucose syrup | 0,70% | 0,70% | 0,70% | 0,70% | 0,80% | 0,80% | 0,80% | 0,80% |
| Fibres | 69% | 69% | 69% | 69% | 79% | 79% | 79% | 79% |
| Moisture | 30% | 30% | 30% | 30% | 20% | 20% | 19% | 19% |
| Phosphate pH3.0 buffer, 0.1M | - | 0,32% | - | - | - | 0,20% | - | - |
| Phosphate pH3.0 buffer, 0.5M | - | - | - | - | - | - | 1,0% | - |
| Phosphate pH6.5 buffer, 0.02M | - | - | 0,06% | - | - | - | - | - |

(continued)

| Example | 1 | 2 | 3 | 4 | 5 | 6 | 7 | 8 |
|---|---|---|---|---|---|---|---|---|
| **Fermentation mixture (%)** | | | | | | | | |
| Phosphate pH6.5 buffer, 0.5 M | - | - | - | - | - | - | - | 1,0% |
| Phosphate pH8.5 buffer, 0.02M | - | - | - | 0,06% | - | - | - | - |
| **Fermentation conditions** | | | | | | | | |
| Temperature | Rt | rt | rt | rt | rt | rt | rt | rt |
| Measuring time (days) | 3 | 1 | 1 | 1 | 3 | 3 | 1 | 1 |
| pH start | 9,6 | 7,9 | 9,2 | 9,4 | 9,8 | 8,4 | 8,1 | 8,1 |
| pH end | 7,2 | 7,7 | 7,6 | 8,0 | 9,7 | 7,5 | 7,1 | 7,1 |
| **Glucose removal** | | | | | | | | |
| >25% reduction (days) | 1 | 1 | 1 | 1 | >3 | 1 | 1 | 1 |
| >50% reduction (days) | 3 | 1 | 1 | 1 | >3 | 1 | 1 | 1 |
| >75% reduction (days) | 3 | 1 | 1 | 1 | >3 | 3 | 1 | 1 |
| >90% reduction (days) | 3 | 1 | 1 | 1 | >3 | 3 | 1 | 1 |

Two examples without phosphates have been included for comparison (ex. 1 and 5).

At 30% moisture, the inclusion of pH 3.0, pH 6.5 or pH 8.5 phosphate buffers all had a shortening effect on the glucose removal time (ex. 2-4 vs. 1). Thus, all three fermentations were complete within a day.

At 19-20% moisture, and with slightly decreased content of Baker's yeast and slightly increased binder content, the inclusion of phosphate buffers likewise had a shortening effect on the glucose removal time (ex. 6-8 vs. 5).

Table 2

| Example | 1 | 2 | 3 | 4 |
|---|---|---|---|---|
| **Fermentation mixture (%)** | | | | |
| Fresh Baker's Yeast | 0,20% | 1,1% | 2,2% | 5,0% |
| alkanolamine-anhydride resin w glucose syrup | 0,80% | 0,79% | 0,78% | 0,75% |
| Fibres | 79% | 78% | 77% | 74% |
| Moisture | 20% | 20% | 20% | 20% |
| **Fermentation conditions** | | | | |
| Temperature | rt | rt | rt | rt |
| Measuring time (days) | 6 | 1 | 1 | 1 |
| pH start | 9,0 | 8,0 | 7,5 | 7,0 |
| pH end | 7,5 | 7,5 | 7,5 | 8,0 |
| **Glucose removal** | | | | |
| >25% reduction (days) | 2 | 1 | 1 | 1 |
| >50% reduction (days) | 2 | 1 | 1 | 1 |
| >75% reduction (days) | 3 | 1 | 1 | 1 |
| >90% reduction (days) | 6 | 1 | 1 | 1 |
| **Test bar compositions (%)** | | | | |
| Rod milled waste | 34,0 | 34,0 | 34,0 | 34,0 |
| **Compression strength (MPa)** | | | | |
| 3 days | 6,3 | 5,5 | 5,0 | 4,3 |
| 7 days | 8,9 | 8,4 | 7,7 | 6,4 |

The impact of the yeast content was studied by varying the yeast concentration from 0.2% to 5.0% (ex. 1-4) using heat treated rod milled waste. The inclusion of increasing amounts of yeast resulted in shortening of the required fermentation time: inclusion of 0.2% yeast required 6 days for >90% glucose removal (ex. 1) while only 1 day was required for >90% glucose removal for 1.1-5.0% yeast (ex. 2-4). The start-pH decreased gradually from 9 to 7 with increasing yeast content.

There seemed to be a gradual decrease in test bar strengths with increasing content of fresh Baker's yeast (ex. 1-4).

Table 3

| Example | 1 | 2 | 3 | 4 | 5 | 6 | 7 | 8 |
|---|---|---|---|---|---|---|---|---|
| **Fermentation mixture (%)** | | | | | | | | |
| Fresh Baker's Yeast | - | 0,20% | 0,59% | 1,0% | - | 0,20% | 0,59% | 1,0% |
| alkanolamine-anhydride resin w glucose syrup | 1,6% | 1,6% | 1,6% | 1,6% | - | - | - | - |
| ascorbic acid - glucose | - | - | - | - | 1,6% | 1,6% | 1,6% | 1,6% |
| Fibres | 79% | 79% | 78% | 78% | 79% | 79% | 78% | 78% |
| Moisture | 20% | 20% | 20% | 19% | 20% | 20% | 20% | 19% |
| **Fermentation conditions** | | | | | | | | |
| Temperature | rt | rt | rt | rt | rt | rt | rt | rt |
| Measuring time (days) | 70 | 70 | 57 | 23 | 70 | 51 | 23 | 16 |
| pH start | 8,5 | 8,5 | 8,5 | 8,5 | 8,0 | 7,5 | 8,0 | 8,0 |
| pH end | 7,5 | 6,5 | 7,5 | 7,0 | 6,5 | 5,5 | 5,5 | 5,5 |
| **Glucose removal** | | | | | | | | |
| >25% reduction (days) | 63 | 35 | 28 | 14 | 57 | 28 | 14 | 9 |
| >50% reduction (days) | 70 | 57 | 51 | 19 | 70 | 35 | 19 | 14 |
| >75% reduction (days) | >70 | 70 | 51 | 21 | >70 | 41 | 21 | 14 |
| >90% reduction (days) | >70 | 70 | 57 | 23 | >70 | 51 | 23 | 16 |

The results show that fermentation in the presence of 1.6% alkanolamine-anhydride resin w glucose syrup binder with 0.2-1.0% fresh Baker's yeast is feasible (ex. 2-4). All fermentations had a start-pH of 8.5 and ended at 6.5-7.5. The time required for >90% removal of the glucose content decreased as a function of increasing yeast content (70 days for 0.2% yeast vs. 23 days for 1.0% yeast, ex. 2 vs. 4). Some glucose removal was observed in the example with no yeast added but the conversion was very slow (ex. 1).

Removal of the glucose content in the presence of 1.6% ascorbic acid - glucose binder with 0.2-1.0% fresh Baker's yeast is feasible (ex. 6-8). These fermentations had a start-pH of 7.5-8 and ended at 5.5. The time required for >90% removal of the glucose content decreased significantly as a function of increasing yeast content (51 days for 0.2% yeast vs. 16 days for 1.0% yeast, ex. 6 vs. 8). Some glucose removal was observed in the example with no yeast added but the conversion was very slow (ex. 5).

Table 4

| Example | 1 | 2 | 3 | 4 |
|---|---|---|---|---|
| **Fermentation mixture (%)** | | | | |
| Fresh Baker's Yeast | 0,20% | 0,20% | 0,20% | - |
| PUF binder | 1,8% | 1,8% | 1,8% | - |
| Glucose syrup | 0,77% | 0,77% | 0,77% | - |
| Fibres | 77% | 77% | 77% | - |
| Moisture | 20% | 20% | 20% | - |
| $NaH_2PO_4$ | - | 0,20% | - | - |
| AcOH | - | - | 0,10% | - |
| **Fermentation conditions** | | | | |
| Temperature | rt | rt | rt | - |
| Measuring time (days) | | 1 1 1 | | |
| pH start | 6,0 | 6,0 | 6,0 | - |

(continued)

| Fermentation conditions | | | | |
|---|---|---|---|---|
| pH end | 6,0 | 6,0 | 6,0 | - |
| **Glucose removal** | | | | |
| >25% reduction (days) | 1 | 1 | 1 | - |
| >50% reduction (days) | 1 | 1 | 1 | - |
| >75% reduction (days) | 1 | 1 | 1 | - |
| >90% reduction (days) | | 1 1 1 | | |
| **Test bar compositions (%)** | | | | |
| Fermentation mixture | 34,0 | 34,0 | 34,0 | - |
| **Compression strength (MPa)** | | | | |
| 3 days | 3,3 | 2,1 | 2,8 | 5,9 |
| 7 days | 5,7 | 5,2 | 5,9 | 8,6 |

Rapid fermentation was observed in all fermentation tests, and >90% glucose removal was observed within one day (ex. 1-3).

Test bars produced from these fermentations showed comparatively low compression strengths after 3 days (2.1-3.3 MPa, ex. 1-3) and after 7 days (5.2-5.9 MPa, ex. 1-3). These values are lower than the reference value (5.9 MPa after 3 days, 8.6 MPa after 7 days, ex. 4).

Example 2: 25% aq. glucose syrup (32.0 g; thus efficiently 8.0 g glucose syrup, 24.0 g moisture) was added portion wise under stirring to PUF rod milled waste (868,4 g, 2.1% binder, 92.1% fibres, 5.8% moisture; thus efficiently 18.2 g binder, 799.8 g fibres, 50.4 g moisture). Stirring was continued for a few minutes further and a mixture of sodium dihydrogen phosphate hydrate (2.37 g; thus efficiently 2.06 g sodium dihydrogen phosphate and 0.31 g moisture) and fresh Baker's yeast (2.09 g; calculated as anhydrous) in water (132.7 g) was then added portion wise under continuous stirring. The fermentation mixture was thus overall initially composed of 20 %-wt. moisture, 0.20 %-wt. fresh Baker's yeast, 0.77 %-wt. glucose syrup, 1.8 %-wt. PUF binder, 0.20 %-wt. sodium dihydrogen phosphate and 77 %-wt. fibres. After stirring for 10 minutes further, the mixture was transferred to a 2.5 L plastic bucket and the bucket was covered with aluminum foil.

Measurements of the glucose content and pH of aqueous extracts were made directly after transferring the mixture to the bucket as well as at relevant days hereafter (intervals of 1-2 days dependent on the evolution in glucose content). A sample of the fermentation mixture (16 g, exact weight noted) was diluted with water (40 g, exact weight noted) in a 100 mL screw cap bottle and the resulting slurry was shaken for 10 minutes. For HPLC studies, the shaken mixture was filtered, where after the pH and glucose content (HPLC, double determinations) of the filtrate was measured. For blood sugar apparatus studies, the shaken mixture was simply allowed to settle for a few minutes and the pH and glucose content (blood sugar apparatus, double determinations) of the supernatant was measured.

Table 5

| Example | 1 | 2 | 3 | 4 | 5 |
|---|---|---|---|---|---|
| **Fermentation mixture (%)** | | | | | |
| Fresh Baker's Yeast | 0,20% | 0,20% | 0,20% | 0,20% | - |
| alkanolamine-anhydride resin w glucose syrup | 2,1% | 2,1% | 2,1% | 2,1% | - |
| Fibres | 78% | 77% | 78% | 78% | - |
| Moisture | 20% | 20% | 20% | 20% | - |
| $NaH_2PO_4$ | 0,20% | 0,40% | - | - | - |
| AcOH | - | - | 0,10% | 0,20% | - |
| **Fermentation conditions** | | | | | |
| Temperature | rt | rt | rt | rt | - |
| Measuring time (days) | 12 | 12 | 12 | 12 | - |
| Time before briquetting (days) | 8 | 8 | 8 | 8 | - |
| pH start | 8,0 | 7,5 | 8,5 | 8,5 | - |
| pH end | 8,7 | 8,7 | 8,1 | 7,6 | - |

(continued)

| Glucose removal | | | | | |
|---|---|---|---|---|---|
| >25% reduction (days) | 4 | 4 | 4 | 4 | - |
| >50% reduction (days) | 4 | 4 | 4 | 4 | - |
| >75% reduction (days) | 4 | 4 | 4 | 4 | - |
| >90% reduction (days) | 4 | 4 | 12 | 12 | - |
| Reduction at briquetting day (%) | >97 | >96 | >78 | >88 | - |
| **Briquette compositions (%)** | | | | | |
| Fermentation mixture | 31,6 | 31,6 | 31,6 | 31,6 | - |
| Rod milled wool | - | - | - | - | 30,0 |
| Cement 52,5R | 9,8 | 9,8 | 9,8 | 9,8 | 10,0 |
| **Briquette details** | | | | | |
| Weight (kg) | 2,17 | 2,23 | 2,43 | 2,22 | 2,07 |
| Height (mm) | 131,4 | 132,6 | 138,4 | 133,4 | 140,4 |
| Density (kg/dm$^3$) | 2,10 | 2,14 | 2,23 | 2,11 | 1,88 |
| Compression strength, 3 days (MPa) | 5,4 | 4,8 | 8,8 | 6,8 | 4,1 |

The fermentation and briquetting results are shown from 1 ton scale fermentation of rod milled alkanolamine-anhydride resin w glucose syrup wastes. The following fermentation conditions were used: 20% moisture, 0.2% fresh Baker's yeast, 2.1% alkanolamine-anhydride resin w glucose syrup binder and 0.1-0.4% sodium dihydrogen phosphate or acetic acid.

The fermentations were complete within 4-12 days (ex. 1-4). The fermentations started at pH 7-8.5 (lowest in the presence of 0.2-0.4% sodium dihydrogen phosphate), and ended at about 7.5-9 (lowest in the presence of 0.1-0.2% acetic acid). The fermentations were more rapid when performed in the presence of 0.2-0.4% sodium dihydrogen phosphate than in the presence of 0.1-0.2% acetic acid (4 days vs. 12 days for >90% glucose removal, ex. 1-2 vs. 3-4).

The fermented wastes were used in the production of briquettes after 8 days of fermentation. At this time, the two fermentations made in the presence of sodium dihydrogen phosphate were nearly complete while the two fermentations made in the presence of acetic acid had reached about 80-90% glucose removal. Higher briquette strengths were obtained with the lowest content of additive and acetic acid as additive resulted in stronger briquettes than sodium dihydrogen phosphate. Three of the four fermented waste compositions yielded briquettes that were above 5 MPa after 3 days (0.2% sodium dihydrogen phosphate, 0.1 and 0.2% acetic acid as additives, ex. 1 and 3-4), while the fourth one was very close (0.1% sodium dihydrogen phosphate as additive, ex. 2). The briquettes made from all four fermentation mixtures were stronger than the reference after 3 days (4.8-8.8 vs. 4.1 MPa, ex. 1-4 vs. 5). This may, however, partly be due to the lower weight and density of the reference briquettes.

Example 1: A mixture of sodium dihydrogen phosphate hydrate (2.6 kg; thus efficiently 2.3 kg sodium dihydrogen phosphate and 0.3 kg moisture) and fresh Baker's yeast (2.3 kg; calculated as anhydrous) in water (133 kg) was mixed portion wise into rod milled waste (1015 kg, 2.4% binder, 88.1% fibres, 9.5% moisture; thus efficiently 24.4 kg binder, 894.2 kg fibres, 96.4 kg moisture). The fermentation mixture was thus overall initially composed of 20 %-wt. moisture, 0.20 %-wt. fresh Baker's yeast, 2.1 %-wt. alkanolamine-anhydride resin w glucose syrup binder, 0.20 %-wt. sodium dihydrogen phosphate and 78 %-wt. fibres. After mixing for 15 minutes further, the mixture was transferred to a 1000 L IBC which was then covered with a plastic bag cover.

Measurements of the glucose content and pH of aqueous extracts were made directly after transferring the mixture to the IBC as well as at relevant days hereafter (intervals of 1-2 days dependent on the evolution in glucose content). A sample of the fermentation mixture (50 g, exact weight noted) was diluted with water (50 g, exact weight noted) in a 100 mL screw cap bottle and the resulting slurry was shaken for 10 minutes. For HPLC studies, the shaken mixture was filtered, where after the pH and glucose content (HPLC, double determinations) of the filtrate was measured. For blood sugar apparatus studies, the shaken mixture was simply allowed to settle for a few minutes and the pH and glucose content (blood sugar apparatus, double determinations) of the supernatant was measured.

After 8 days of fermentation (>97% reduction in glucose content), the fermentation mixture was used in production of test briquettes.

Table 6

| Example | 1 | 2 | 3 | 4 | 5 | 6 | 7 | 8 |
|---|---|---|---|---|---|---|---|---|
| **Fermentation mixture (%)** | | | | | | | | |
| Fresh Baker's Yeast | - | 8% | 18% | 7% | 12% | 10% | 4% | 4% |
| alkanolamine-anhydride resin w glucose syrup | 7% | 7% | 15% | 12% | 16% | 17% | 18% | 18% |
| Fibres | 10% | 9% | 20% | 16% | 22% | 23% | 24% | 24% |
| Moisture | 83% | 76% | 46% | 66% | 50% | 51% | 54% | 54% |
| **Fermentation conditions** | | | | | | | | |
| Temperature | rt | rt | rt | rt | rt | rt | rt | rt |
| Measuring time (hours) | 72 | 2 | 3 | 3 | 4 | 4 | 7 | 8 |
| pH start | 5,0 | 5,0 | 5,0 | 5,0 | 5,0 | 5,0 | 5,0 | 5,0 |
| pH end | 5,0 | 5,0 | 5,0 | 5,0 | 5,0 | 5,0 | 5,0 | 5,0 |
| **Glucose removal** | | | | | | | | |
| >25% reduction (hours) | >72 | 1,0 | 1,0 | 1,3 | 2,1 | 2,0 | 4,2 | 4,8 |
| >50% reduction (hours) | >72 | 1,0 | 2,2 | 2,0 | 3,2 | 2,5 | 5,2 | 4,8 |
| >75% reduction (hours) | >72 | 1,5 | 2,2 | 2,5 | 3,2 | 3,5 | 6,8 | 6,1 |
| >90% reduction (hours) | >72 | 1,5 | 2,8 | 3,0 | 3,2 | 4,0 | 6,8 | 7,2 |

The results show that it was possible to remove >90% of the glucose content in spinning chamber filters (SCF) within a matter of only a few hours, dependent on the conditions (ex. 2-8). The yeast content in these slurry fermentations was high (4-18%) since the yeast was now focused on only the SCFs. Accordingly, the binder content was also very high (7-18%). As could be expected, there was overall a tendency towards more rapid fermentation for high moisture levels (> 60%, ex. 2 and 4) and/or high yeast contents (>4%, ex. 2-6).

No additives were required in these high-moisture fermentations. It is not unlikely, though that additives such as the ones used in the previous tests may increase the fermentation speeds even further. The control with no yeast added showed no significant reduction in glucose content within 72 hours (ex. 1).

Table 7

| Example | 1 | 2 | 3 | 4 | 5 | 6 |
|---|---|---|---|---|---|---|
| **Spinning chamber filter fermentation (SCF) mixture (%)** | | | - | | | - |
| **Fresh** Baker's Yeast | 4% | 12% | - | 4% | 12% | - |
| alkanolamine-anhydride resin w glucose syrup | 18% | 16% | - | 18% | 16% | - |
| Fibres | 24% | 22% | - | 24% | 22% | - |
| Moisture | 54% | 50% | - | 54% | 50% | - |
| **SCF fermentation conditions** | | | | | | |
| Temperature | rt | rt | - | rt | rt | - |
| Time before next step (hours) | 25 | 8 | - | 25 | 8 | - |
| pH start | 5,0 | 5,0 | - | 5,0 | 5,0 | - |
| pH end | 5,0 | 5,0 | - | 5,0 | 5,0 | - |
| **SCF glucose removal** | | | | | | |
| >90% reduction (hours) | 7,2 | 3,2 | - | 7,2 | 3,2 | - |
| **Rod milled wool (RMW) fermentation mixture** (%) | | | | | | |
| Baker's yeast | 0,24% | 0,70% | 0,59% | 0,24% | 0,70% | 0,58% |
| alkanolamine-anhydride resin w glucose syrup | 1,2% | 1,2% | 1,6% | 2,1% | 2,1% | 2,8% |
| Fibres | 78% | 78% | 78% | 77% | 77% | 77% |
| *Fibres from SCF* | *1,4%* | *1,3%* | - | *1,3%* | *1,3%* | - |

(continued)

| SCF glucose removal | | | | | | |
|---|---|---|---|---|---|---|
| Moisture | 20% | 20% | 20% | 20% | 20% | 19% |
| **RMW fermentation conditions** | | | | | | |
| Temperature | rt | rt | rt | rt | rt | Rt |
| Measuring time (days) | 21 | 2 | 46 | 70 | 5 | 63 |
| pH start | 8,5 | 8,0 | 8,5 | 8,0 | 7,5 | 8,5 |
| pH end | 7,5 | 6,5 | 6,5 | 7,5 | 6,5 | 5,5 |
| **RMW glucose removal** | | | | | | |
| >25% reduction (days) | 14 | 1 | 22 | 10 | 1 | 26 |
| >50% reduction (days) | 14 | 2 | 36 | 21 | 2 | 42 |
| >75% reduction (days) | 21 | 2 | 42 | 63 | 4 | 57 |
| >90% reduction (days) | 21 | 2 | 46 | 70 | 5 | 63 |

The two-step fermentations were performed by first carrying out a slurry fermentation of SCFs and then adding an amount of this fermented mixture to the model alkanolamine-anhydride resin w glucose syrup rod milled waste. The fermented SCF mixtures were added in an amount that would result in overall yeast concentrations of 0.2-0.7% and so that the fibres originating from the SCF fermentation would constitute 1.3-1.4% of the total fermentation mixture. Two examples made by direct fermentation of model alkanolamine-anhydride resin w glucose syrup rod milled waste have been included for comparison (ex. 3 and 6).

The results obtained for two-step fermentation of model alkanolamine-anhydride resin w glucose syrup rod milled waste (ex. 1-2 and 4-5) demonstrate that it is indeed possible to conduct the fermentations as a two-step process by first rapidly fermenting the SCFs and then transferring this mixture to the remaining rod milled wastes for completing the overall fermentation.

Example 2, first step: Alkanolamine-anhydride resin w glucose syrup spinning chamber filters (250 g, 37.3% binder, 49.9% fibres, 12.8% moisture; thus efficiently 93.3 g binder, 124.8 g fibres, 32.0 g moisture) were cut into approx. $5 \times 5 \times 5$ cm blocks and were then stirred in water (250 g) for 25 min at room temperature. To the resulting slurry was added a mixture of fresh Baker's yeast (65.9 g; calculated as anhydrous) and slow stirring was continued for 8 hours at room temperature before the resulting mixture was used in the next step. The fermentation mixture was thus overall initially composed of 50 %-wt. moisture, 12 %-wt. fresh Baker's yeast, 16 %-wt. Alkanolamine-anhydride resin w glucose syrup binder and 22 %-wt. fibres.

Measurements of the glucose content and pH of aqueous extracts were made immediately after mixing all ingredients as well as at relevant times hereafter (intervals of 1-2 hours dependent on the evolution in glucose content). A sample of the fermentation mixture (0.5 g, exact weight noted) was diluted with water (7.5 g, exact weight noted) in a small beaker and the resulting slurry was shaken for 1 minute. For HPLC studies, the shaken mixture was filtered, where after the pH and glucose content (HPLC, double determinations) of the filtrate was measured. For blood sugar apparatus studies, the shaken mixture was simply allowed to settle for a few minutes and the pH and glucose content (blood sugar apparatus, double determinations) of the supernatant was measured.

Second step: 20% moisture, 0.7% fresh Baker's yeast, 1.2% alkanolamine-anhydride resin w glucose syrup binder.

Alkanolamine-anhydride resin w glucose syrup binder (68.0 g, 18.0% solids; thus efficiently 12.2 g binder and 55.8 g moisture) was added portion wise under stirring to heat treated rod milled waste (780 g). Stirring was continued for a few minutes further and water (121.4 g) was then added portion wise under continuous stirring. A portion of the mixture containing fermented spinning chamber filters produced in the first step (51.6 g, 26.4% fibres, 59.7% moisture, 13.9% yeast assuming that all binder solids have been turned into CO2 and has evaporated off while all other components remain unchanged; thus efficiently 13.6 g fibres, 30.8 g moisture, 7.2 g yeast) was added portion wise under stirring. The fermentation mixture was thus overall initially composed of 20 %-wt. moisture, 0.70 %-wt. fresh Baker's yeast, 1.2 %-wt. alkanolamine-anhydride resin w glucose syrup binder and 78 %-wt. fibres. After stirring for 10 minutes further, the mixture was transferred to a 2.5 L plastic bucket and the bucket was covered with aluminum foil.

Measurements of the glucose content and pH of aqueous extracts were made directly after transferring the mixture to the bucket as well as at relevant days hereafter (intervals of 2-7 days dependent on the evolution in glucose content). A sample of the fermentation mixture (10 g, exact weight noted) was diluted with water (75 g, exact weight noted) in a 100 mL screw cap bottle and the resulting slurry was shaken for 10 minutes. For HPLC studies, the shaken mixture was filtered, where after the pH and glucose content (HPLC, double determinations) of the filtrate was measured.

For blood sugar apparatus studies, the shaken mixture was simply allowed to settle for a few minutes and the pH and glucose content (blood sugar apparatus, double determinations) of the supernatant was measured.

**Claims**

1. A compacted body, in particular a briquette, suitable for a use in a mineral charge in the production of man-made vitreous fibres (MMVF), said compacted body comprising

   a) a product obtained by treating a substrate with a method for the reduction of the carbohydrate content in a mineral wool material, said material comprising a carbohydrate-containing binder, wherein the method involves a step of treating a substrate comprising the material with one or more microorganisms capable of metabolizing the carbohydrate and/or an extract of one or more microorganisms capable of metabolizing the carbohydrate;
   b) a cement binder.

2. Compacted body according to claim 1, wherein the method involves a step of comminuting the material, preferably by rod milling the material.

3. Compacted body according to claim 1 or 2, wherein the material comprises one or more of spinning chamber filters, screw waste, side cuttings, flushed wastes, spinning chamber filter bottom wastes, cleanings of spinning chamber, spinning screw waste, cured waste, spinning chamber filter mats.

4. Compacted body according to any of the preceding claims, wherein the substrate comprises water in an amount of more than 40 to 90 wt.-%, preferably 50 to 76 wt.-%, based on the total weight of the substrate.

5. Compacted body according to any of the preceding claims, wherein the one or more microorganisms is present in an amount of $0.0125 \times 10^9$ to $10 \times 10^9$, preferably $0.1 \times 10^9$ to $5 \times 10^9$ microorganisms/gram based on the total weight of the substrate, and microorganisms and/or extract of microorganisms.

6. Compacted body according to any of the preceding claims, wherein the extract is present in an amount of 0.5 to 25 wt.-%, preferably 4 to 18 wt.- %, based on the total weight of the substrate, and microorganisms and/or extract of microorganisms.

7. Compacted body according to any of the preceding claims, wherein the material has a carbohydrate content of 0.1 to 35, preferably 0.5 to 25 wt.-% carbohydrate, based on the total weight of the material.

8. Compacted body according to any of the preceding claims, wherein the step of treating the substrate takes place at a temperature of 10 to 50 °C, preferably 15 to 45 °C.

9. Compacted body according to any of the preceding claims, wherein the step of treating the substrate takes place over a time of 1 - 72 hours, preferably 6 - 24 hours.

10. Compacted body according to any of claims 1 to 3, wherein the substrate comprises water in an amount of 10 to 40 wt.-%, preferably 20 to 40 wt.-%, based on the total weight of the substrate.

11. Compacted body according to any of claims 1 to 3 or 10, wherein the one or more microorganisms is present in an amount of $0.000625 \times 10^9$ to $2.5 \times 10^9$, preferably $0.005 \times 10^9$ to $1.5 \times 10^9$ microorganisms/gram, based on the total weight of the substrate, and microorganisms and/or extract of microorganisms.

12. Compacted body according to any of claims 1 to 3 or 10 or 11, wherein the extract is present in an amount of 0.05 to 15 wt.-%, preferably 0.2 to 5 wt.- %, based on the total weight of the substrate, microorganisms and/or extract of microorganisms.

13. Compacted body according to any of claims 1 to 3 or 10 to 12, wherein the substrate comprises a fermentation enhancer preferably in form of a mineral or organic acid or any salt thereof.

14. Compacted body according to claim 13, wherein the fermentation enhancer is one or more of the group of phosphoric acids and/or phosphates, acetic acid and/or any salts thereof.

15. Compacted body according to claims 13 or 14, wherein the substrate comprises the fermentation enhancer in an amount of 0.01 to 5 wt.-%, preferably 0.05 to 0.4 wt.-%, based on the total weight of the substrate, microorganisms and/or extract of microorganisms.

16. Compacted body according to any of claims 10 to 15, wherein the material has a carbohydrate content of 0.05 to 10, preferably 0.25 to 4 wt.-% carbohydrate, based on the total weight of the material.

17. Compacted body according to any of claims 1 to 3 or 10 to 16, wherein the method involves the step of treating the substrate at a temperature of 10 to 50 °C, preferably 15 to 45 °C.

18. Compacted body according to any of claims 1 to 3 or 10 to 17, wherein the method involves the step of treating the substrate over a time of 3 hours to 30 days, preferably 1 to 3 days.

19. Compacted body according to any of the preceding claims, wherein the method comprises at least two steps in form of:

    (i) treating a substrate according to claim 4, and
    (ii) treating a combined substrate of the product of the step (i) and a substrate according to claim 10.

20. Compacted body according to claim 19, wherein step (i) has one or more of the features of any of the claims 5 to 9.

21. Compacted body according to claim 19 or 20, wherein step (ii) has one or more of the features of any of the claims 10 to 18.

22. Compacted body according to any of claims 19 to 21, wherein the substrate treated in step (i) comprises spinning chamber filters.

23. Compacted body according to any of the preceding claims, wherein the carbohydrate-containing binder used in the production of the mineral wool material comprises a phenol-formaldehyde-based resol and the carbohydrate being selected from a sugar, such as dextrose.

24. Compacted body according to any of claims 1 to 22, wherein the carbohydrate-containing binder used in the production of the mineral wool material further comprises

    (a) a polycarboxylic acid component or any salt thereof and/or an inorganic acid or any salt thereof
    (b) a component selected from the group consisting of amine compounds, ammonia; and optionally,
    (c) a reaction product of a polycarboxylic acid component or anhydride thereof and an alkanolamine component.

25. Compacted body according to any of the preceding claims, wherein the carbohydrate-containing binder used in the production of the mineral wool material comprises a carbohydrate selected from hexose, such as dextrose, fructose, pentose such as xylose and/or sucrose, glucose syrup.

26. Compacted body according to any of the preceding claims, wherein the one or more microorganism is selected from the group consisting of fungi, yeasts, preferably the yeast comprising saccharomyces cerevisiae, and/or bacteria in particular of the genera lactobacillus, leuconostoc, pediococcos, and/or bifidobacterium.

**Patentansprüche**

1. Verdichteter Körper, insbesondere ein Brikett, geeignet für eine Verwendung in einer mineralischen Charge bei der Herstellung von künstlichen Mineralfasern (KMF), wobei der verdichtete Körper umfasst

    a) ein Produkt, das durch Behandlung eines Substrats mit einem Verfahren zur Reduzierung des Kohlenhydratgehalts in einem Mineralwollematerial erhalten wird, wobei das Material ein kohlenhydrathaltiges Bindemittel umfasst, wobei das Verfahren einen Schritt der Behandlung eines Substrats, das das Material umfasst, mit einem oder mehreren Mikroorganismen, die das Kohlenhydrat metabolisieren können, und/oder einem Extrakt eines oder mehrerer Mikroorganismen, die das Kohlenhydrat metabolisieren können, umfasst;
    a) ein Zementbindemittel.

**2.** Verdichteter Körper nach Anspruch 1, wobei das Verfahren einen Schritt des Zerkleinerns des Materials, vorzugsweise durch Stabmahlen des Materials, umfasst.

**3.** Verdichteter Körper nach Anspruch 1 oder 2, wobei das Material einen oder mehrere der folgenden Stoffe aus Spinnkammerfilter, Schneckenabfälle, Seitenabfälle, gespülte Abfälle, Spinnkammerfilterbodenabfälle, Reinigungen der Spinnkammer, Spinnschneckenabfälle, ausgehärtete Abfälle und Spinnkammerfiltermatten umfasst.

**4.** Verdichteter Körper nach einem der vorhergehenden Ansprüche, wobei das Substrat Wasser in einer Menge von mehr als 40 bis 90 Gew.-%, vorzugsweise 50 bis 76 Gew.-%, bezogen auf das Gesamtgewicht des Substrats, enthält.

**5.** Verdichteter Körper nach einem der vorhergehenden Ansprüche, wobei der eine oder die mehreren Mikroorganismen in einer Menge von $0,0125 \times 10^9$ bis $10 \times 10^9$, vorzugsweise $0,1 \times 10^9$ bis $5 \times 10^9$ Mikroorganismen/Gramm, bezogen auf das Gesamtgewicht des Substrats, vorhanden sind, und Mikroorganismen und/oder Extrakt von Mikroorganismen.

**6.** Verdichteter Körper nach einem der vorhergehenden Ansprüche, wobei der Extrakt in einer Menge von 0,5 bis 25 Gew.-%, vorzugsweise 4 bis 18 Gew.-%, bezogen auf das Gesamtgewicht des Substrats und der Mikroorganismen und/oder des Extrakts der Mikroorganismen vorliegt.

**7.** Verdichteter Körper nach einem der vorhergehenden Ansprüche, wobei das Material einen Kohlenhydratgehalt von 0,1 bis 35, vorzugsweise 0,5 bis 25 Gew.-% Kohlenhydrat, bezogen auf das Gesamtgewicht des Materials, aufweist.

**8.** Verdichteter Körper nach einem der vorhergehenden Ansprüche, wobei der Schritt der Behandlung des Substrats bei einer Temperatur von 10 bis 50 °C, vorzugsweise 15 bis 45 °C, erfolgt.

**9.** Verdichteter Körper nach einem der vorhergehenden Ansprüche, wobei der Schritt der Behandlung des Substrats über einen Zeitraum von 1 bis 72 Stunden, vorzugsweise 6 bis 24 Stunden, erfolgt.

**10.** Verdichteter Körper nach einem der Ansprüche 1 bis 3, wobei das Substrat Wasser in einer Menge von 10 bis 40 Gew.-%, vorzugsweise 20 bis 40 Gew.-%, bezogen auf das Gesamtgewicht des Substrats, enthält.

**11.** Verdichteter Körper nach einem der Ansprüche 1 bis 3 oder 10, wobei der eine oder die mehreren Mikroorganismen in einer Menge von $0,000625 \times 10^9$ bis $2,5 \times 10^9$, vorzugsweise $0,005 \times 10^9$ bis $1,5 \times 10^9$ Mikroorganismen/Gramm, bezogen auf das Gesamtgewicht des Substrats, und Mikroorganismen und/oder Extrakt von Mikroorganismen vorhanden sind.

**12.** Verdichteter Körper nach einem der Ansprüche 1 bis 3 oder 10 oder 11, wobei der Extrakt in einer Menge von 0,05 bis 15 Gew.-%, vorzugsweise 0,2 bis 5 Gew.-%, bezogen auf das Gesamtgewicht des Substrats, der Mikroorganismen und/oder des Extrakts der Mikroorganismen, vorhanden ist.

**13.** Verdichteter Körper nach einem der Ansprüche 1 bis 3 oder 10 bis 12, wobei das Substrat einen Fermentationsverstärker vorzugsweise in Form einer mineralischen oder organischen Säure oder eines Salzes davon umfasst.

**14.** Verdichteter Körper nach Anspruch 13, wobei der Fermentationsverstärker einer oder mehrere aus der Gruppe der Phosphorsäuren und/oder Phosphate, Essigsäure und/oder deren Salze ist.

**15.** Verdichteter Körper nach Anspruch 13 oder 14, wobei das Substrat den Fermentationsverstärker in einer Menge von 0,01 bis 5 Gew.-%, vorzugsweise 0,05 bis 0,4 Gew.-%, bezogen auf das Gesamtgewicht des Substrats, der Mikroorganismen und/oder des Extrakts der Mikroorganismen, umfasst.

**16.** Verdichteter Körper nach einem der Ansprüche 10 bis 15, wobei das Material einen Kohlenhydratgehalt von 0,05 bis 10, vorzugsweise 0,25 bis 4 Gew.-% Kohlenhydrat, bezogen auf das Gesamtgewicht des Materials, aufweist.

**17.** Verdichteter Körper nach einem der Ansprüche 1 bis 3 oder 10 bis 16, wobei das Verfahren den Schritt der Behandlung des Substrats bei einer Temperatur von 10 bis 50 °C, vorzugsweise 15 bis 45 °C, umfasst.

**18.** Verdichteter Körper nach einem der Ansprüche 1 bis 3 oder 10 bis 17, wobei das Verfahren den Schritt der Behandlung des Substrats über einen Zeitraum von 3 Stunden bis 30 Tagen, vorzugsweise 1 bis 3 Tagen, umfasst.

**19.** Verdichteter Körper nach einem der vorangehenden Ansprüche, wobei das Verfahren mindestens zwei Schritte umfasst in Form von:

(i) Behandeln eines Substrats nach Anspruch 4, und
(ii) Behandlung eines kombinierten Substrats aus dem Produkt aus Schritt (i) und einem Substrat nach Anspruch 10.

**20.** Verdichteter Körper nach Anspruch 19, wobei Schritt (i) eines oder mehrere der Merkmale von einem der Ansprüche 5 bis 9 aufweist.

**21.** Verdichteter Körper nach Anspruch 19 oder 20, wobei Schritt (ii) eines oder mehrere der Merkmale eines der Ansprüche 10 bis 18 aufweist.

**22.** Verdichteter Körper nach einem der Ansprüche 19 bis 21, wobei das in Schritt (i) behandelte Substrat Spinnkammerfilter umfasst.

**23.** Verdichteter Körper nach einem der vorhergehenden Ansprüche, wobei das bei der Herstellung des Mineralwollematerials verwendete kohlenhydrathaltige Bindemittel ein Resol auf Phenol-Formaldehyd-Basis umfasst und das Kohlenhydrat aus einem Zucker, wie z.B. Dextrose, ausgewählt ist.

**24.** Verdichteter Körper nach einem der Ansprüche 1 bis 22, wobei das bei der Herstellung des Mineralwollematerials verwendete kohlenhydrathaltige Bindemittel ferner umfasst

(a) eine Polycarbonsäurekomponente oder ein Salz davon und/oder eine anorganische Säure oder ein Salz davon
(b) eine Komponente, ausgewählt aus der Gruppe bestehend aus Aminverbindungen, Ammoniak; und gegebenenfalls,
(c) ein Reaktionsprodukt aus einer Polycarbonsäurekomponente oder einem Anhydrid davon und einer Alkanolaminkomponente.

**25.** Verdichteter Körper nach einem der vorhergehenden Ansprüche, wobei das bei der Herstellung des Mineralwollematerials verwendete kohlenhydrathaltige Bindemittel ein Kohlenhydrat umfasst, das aus Hexose, wie Dextrose, Fruktose, Pentose, wie Xylose und/oder Saccharose, und Glukosesirup ausgewählt ist.

**26.** Verdichteter Körper nach einem der vorhergehenden Ansprüche, wobei der eine oder die mehreren Mikroorganismus/Mikroorganismen ausgewählt ist/sind aus der Gruppe bestehend aus Pilzen, Hefen, vorzugsweise der Hefe Saccharomyces cerevisiae, und/oder Bakterien, insbesondere der Gattungen Lactobacillus, Leuconostoc, Pediococcos und/oder Bifidobacterium.

**Revendications**

**1.** Corps compacté, en particulier une briquette, utilisable dans une charge minérale dans la production de fibres vitreuses synthétiques (MMVF), ledit corps compacté comprenant

a) un produit obtenu par traitement d'un substrat avec un procédé pour réduire la teneur en hydrates de carbone d'un matériau en laine minérale, ledit matériau comprenant un liant contenant des hydrates de carbone, lequel procédé met en jeu une étape de traitement d'un substrat comprenant le matériau avec un ou plusieurs microorganismes capables de métaboliser les hydrates de carbone et/ou un extrait d'un ou plusieurs microorganismes capables de métaboliser les hydrates de carbone ;
b) un liant de ciment.

**2.** Corps compacté selon la revendication 1, dans lequel le procédé met en jeu une étape de pulvérisation du matériau, de préférence par broyage du matériau au moyen d'un broyeur à barres.

**3.** Corps compacté selon la revendication 1 ou 2, dans lequel le matériau comprend un ou plusieurs parmi des filtres de chambres de filage, des déchets de vis, des résidus d'élagage, des déchets d'évacuation, des déchets de fond de filtres de chambres de filage, des résidus de nettoyage de chambres de filage, des déchets de vis de filage, des déchets durcis, des mats de filtres de chambres de filage.

4. Corps compacté selon l'une quelconque des revendications précédentes, dans lequel le substrat comprend de l'eau en une quantité de plus de 40 à 90 % en poids, de préférence de 50 à 76 % en poids, par rapport au poids total du substrat.

5. Corps compacté selon l'une quelconque des revendications précédentes, dans lequel le ou les microorganismes sont présents en une quantité de $0,0125 \times 10^9$ à $10 \times 10^9$, de préférence de $0,1 \times 10^9$ à $5 \times 10^9$ microorganismes par gramme, par rapport au poids total du substrat, et des microorganismes et/ou de l'extrait de microorganismes.

6. Corps compacté selon l'une quelconque des revendications précédentes, dans lequel l'extrait est présent en une quantité de 0,5 à 25 % en poids, de préférence de 4 à 18 % en poids, par rapport au poids total du substrat, et des microorganismes et/ou de l'extrait de microorganismes.

7. Corps compacté selon l'une quelconque des revendications précédentes, dans lequel le matériau a une teneur en hydrates de carbone de 0,1 à 35, de préférence de 0,5 à 25 % en poids d'hydrates de carbone, par rapport au poids total du matériau.

8. Corps compacté selon l'une quelconque des revendications précédentes, dans lequel l'étape de traitement du substrat a lieu à une température de 10 à 50°C, de préférence de 15 à 45°C.

9. Corps compacté selon l'une quelconque des revendications précédentes, dans lequel l'étape de traitement du substrat a lieu pendant un temps de 1 à 72 heures, de préférence de 6 à 24 heures.

10. Corps compacté selon l'une quelconque des revendications 1 à 3, dans lequel le substrat comprend de l'eau en une quantité de 10 à 40 % en poids, de préférence de 20 à 40 % en poids, par rapport au poids total du substrat.

11. Corps compacté selon l'une quelconque des revendications 1 à 3 et 10, dans lequel le ou les microorganismes sont présents en une quantité de $0,000625 \times 10^9$ à $2,5 \times 10^9$, de préférence de $0,005 \times 10^9$ à $1,5 \times 10^9$ microorganismes par gramme, par rapport au poids total du substrat, et des microorganismes et/ou de l'extrait de microorganismes.

12. Corps compacté selon l'une quelconque des revendications 1 à 3, 10 et 11, dans lequel l'extrait est présent en une quantité de 0,05 à 15 % en poids, de préférence de 0,2 à 5 % en poids, par rapport au poids total du substrat, et des microorganismes et/ou de l'extrait de microorganismes.

13. Corps compacté selon l'une quelconque des revendications 1 à 3 et 10 à 12, dans lequel le substrat comprend un amplificateur de fermentation de préférence sous la forme d'un acide minéral ou organique ou de l'un quelconque de ses sels.

14. Corps compacté selon la revendication 13, dans lequel l'amplificateur de fermentation est un ou plusieurs du groupe comprenant les acides phosphoriques et/ou les phosphates, l'acide acétique et/ou n'importe lequel de ses sels.

15. Corps compacté selon la revendication 13 ou 14, dans lequel le substrat comprend l'amplificateur de fermentation en une quantité de 0,01 à 5 % en poids, de préférence de 0,05 à 0,4 % en poids, par rapport au poids total du substrat, et des microorganismes et/ou de l'extrait de microorganismes.

16. Corps compacté selon l'une quelconque des revendications 10 à 15, dans lequel le matériau a une teneur en hydrates de carbone de 0,05 à 10, de préférence de 0,25 à 4 % en poids d'hydrates de carbone, par rapport au poids total du matériau.

17. Corps compacté selon l'une quelconque des revendications 1 à 3 et 10 à 16, dans lequel le procédé met en jeu une étape de traitement du substrat à une température de 10 à 50°C, de préférence de 15 à 45°C.

18. Corps compacté selon l'une quelconque des revendications 1 à 3 et 10 à 17, dans lequel le procédé met en jeu une étape de traitement du substrat pendant un temps de 3 heures à 30 jours, de préférence de 1 à 3 jours.

19. Corps compacté selon l'une quelconque des revendications précédentes, dans lequel le procédé comprend au moins deux étapes sous la forme suivante :

(i) traitement d'un substrat selon la revendication 4, et
(ii) traitement d'un substrat combiné du produit de l'étape (i) et d'un substrat selon la revendication 10.

20. Corps compacté selon la revendication 19, dans lequel l'étape (i) a une ou plusieurs des caractéristiques de l'une quelconque des revendications 5 à 9.

21. Corps compacté selon la revendication 19 ou 20, dans lequel l'étape (ii) a une ou plusieurs des caractéristiques de l'une quelconque des revendications 10 à 18.

22. Corps compacté selon l'une quelconque des revendications 19 à 21, dans lequel le substrat traité dans l'étape (i) comprend des filtres de chambres de filage.

23. Corps compacté selon l'une quelconque des revendications précédentes, dans lequel le liant contenant des hydrates de carbone utilisé dans la production du matériau en laine minérale comprend un résol à base de phénol-formaldéhyde et les hydrates de carbone sont choisis parmi les sucres tels que le dextrose.

24. Corps compacté selon l'une quelconque des revendications 1 à 22, dans lequel le liant contenant des hydrates de carbone utilisé dans la production du matériau en laine minérale comprend en outre

(a) un composant acide polycarboxylique ou l'un quelconque de ses sels et/ou un acide inorganique ou l'un quelconque de ses sels
(b) un composant choisi dans le groupe constitué par les composés de type amine, l'ammoniac ; et éventuellement
(c) un produit réactionnel d'un composant acide polycarboxylique ou d'un anhydride de celui-ci et d'un composant alcanolamine.

25. Corps compacté selon l'une quelconque des revendications précédentes, dans lequel le liant contenant des hydrates de carbone utilisé dans la production du matériau en laine minérale comprend des hydrates de carbone choisis parmi les hexoses, tels que le dextrose, le fructose, les pentoses tels que le xylose et/ou le saccharose, le sirop de glucose.

26. Corps compacté selon l'une quelconque des revendications précédentes, dans lequel le ou les microorganismes sont choisis dans le groupe constitué par les champignons, les levures, de préférence les levures comprenant Saccharomyces cerevisiae, et/ou les bactéries, en particulier des genres lactobacillus, leuconostoc, pediococcos, et/ou bifidobacterium.

**REFERENCES CITED IN THE DESCRIPTION**

**Patent documents cited in the description**

- WO 2007014236 A

- WO 2012013780 A1